# EUROPEAN PATENT APPLICATION

(11) **EP 0 575 147 A2**
(43) Date of publication of application: **22.12.1993**
(21) Application number: 93304651.8
(22) Date of filing: 15.06.1993
(51) Int. Cl.: G06F 3/14, G05B 23/00

(54) **Device dependent layer of a windowing system for a process control system display**

(30) Priority: 16.06.1992 US 899197
(71) Applicant: HONEYWELL INC., Minneapolis Minnesota 55408 (US)
(72) Inventor: Clawson, Lawrence A., Cave Creek, Arizona 85331 (US); Kilgore, William B., Phoenix, Arizona 85024 (US); Rodrigo, Tina M., Gilbert, Arizona 85234 (US)
(74) Representative: Fox-Male, Nicholas Vincent Humbert

(57) **Abstract**

The display system of a process control system is enhanced by addition windowing capabilities which allow simultaneously display of numerous windows. To ensure the network display coexist with the windowing system, interpretation of communication between the systems is provided, and enhancements of the display generator's color map ensure the integrity of the network display.

## Description

### RELATED APPLICATIONS

The present application is related to the following:
a) Copending patent application, Serial No. , entitled "An Open Distributed Digital System" by K. Staggs et al.;
b) Copending patent application, Serial No. , entitled "A Method for Controlling Window Displays in an Open System Windows Environment" by K. Staggs et al.;
c) Copending patent application, Serial No. , entitled "Priority Based Graphics for an Open Systems Windows Environment" by W.B. Kilgore et al.;
d) Copending patent application, Serial No. , entitled "Directly Connected Display of Process Control System in an Open Systems Windows Environment" by W.B. Kilgore et al.;
e) Copending patent application, Serial No. , entitled "A Method of Coupling Computer Platforms..." by D. Phillips et al.;

all of the above filed on the same day as the present application, and all of the above assigned to Honeywell Inc., the assignee of the present application.

### BACKGROUND OF THE INVENTION

The present invention relates to a display system to be used in a process control system. Specifically, the invention provides windowing capabilities to the process control system display.

Process control systems are used to control certain manufacturing processes automatically. One example of a manufacturing process typically controlled by a process control systems is the refining of oil.

A process control system typically has a control panel or universal station which contains keyboards and display screens which allow the plant operators and plant administrators to monitor and adjust the manufacturing process. During operation of the process control system it is necessary to display a large amounts of information on the display screen. This displayed information will allow the operator to make necessary adjustments which may be required during the manufacturing process.

Modern day process control systems are "closed", i.e., the process control system does not communicate with any outside devices nor do outside devices have access to information within the process control system. This closed architecture does not allow other types of equipment to be connected to nor interface with the process control system. All communication within the process control system is maintained by the system network and other computer systems are not allowed access to this information.

In this closed architecture there is typically one system display which is connected to the local control network. This system display communicates all information needed by the operator to monitor the operation of the manufacturing process. The display is limited by the hardware connected to the local control network.

Recently, the concept of windowing has become increasingly popular in numerous display systems. Windowing allows numerous pieces of information to be simultaneously displayed in numerous different windows upon a graphics display. Windowing is not possible on the current system display which is driven by the local control network.

### SUMMARY OF THE INVENTION

Windowing capability can be provided to the display system with the addition of graphics processing. However, the necessary graphics processing is not compatible with the systems displays of the local control network.

To allow windowing to operate on the present system display, certain considerations must be made which allow the windows systems to be compatible with the display. Considerations must be made within the graphics processing system to allow the windowing system to support a number of keyboards and to support a number of pointing devices. These pointing devices may include either touch screens (absolute position pointing devices), mice or roller balls (relative position pointing devices).

Another consideration that must be made within the windowing system is to allow for the change of color maps on the system display. Windowing systems often allow for numerous different displays to be projected on the CRT. Therefore, different color maps must be used by the display system to allow the colors of the current window to be accurate. To provide accurate coloring requires different color maps to be communicated to the display system which correspond to the color map of the current window.

In a process control system it is important to accurately display the current status of the manufacturing process. Therefore, it is important that the color map corresponding to the process control system status display, or network display, not be altered. In the present invention color maps are maintained to allow for the change of colors to adjust to the current window while also maintaining the integrity of the systems status display.

Furthermore, since a process control system typically involves a number of keyboards, accommodations must be made. With all of these keyboards, conversions are made to allow the windowing system to recognize all keys.

It is an object of this present invention to provide a display system for a manufacturing process control system which allows windowing as well as maintaining the integrity of the system display. It is also an object of the present invention to provide a windowing system that is compatible with present hardware currently being used on process controlled systems.

### BRIEF DESCRIPTION OF THE DRAWINGS

Other objects, features, and advantages of the invention would be apparent from the following detailed description taken in conjunction with the accompanying drawings in which:
Fig. 1 is a block diagram showing a process control system having at least one display;
Fig. 2 is a block diagram depicting the typical elements of the many physical modules within a process control system; and
Fig. 3 is a block diagram illustrating the different parts of the universal station including the display system.

### DETAILED DESCRIPTION OF THE INVENTION

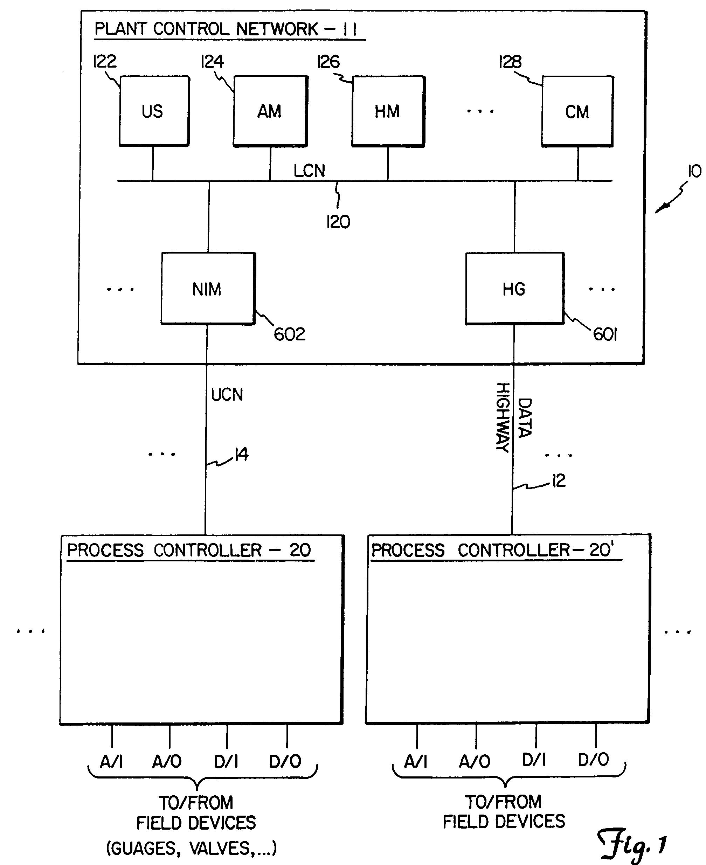

Before describing the present invention, it will be helpful to understand the system environment in which the invention is utilized. Referring to Fig. 1, there is shown a block diagram of a process control system 10 of the preferred embodiment in which the present invention can be found. The process control system 10 includes a plant control network 11, and connected thereto is a data highway 12, which permits a process controller 20' to be connected thereto. In the present day process control system 10, additional process controllers 20' can be operatively connected to the plant control network 11 via a corresponding highway gateway 601 and a corresponding data highway 12. A process controller 20, an interface apparatus which includes many new, additions, improvements, and features over the process controller 20', is operatively connected to the plant control network 11 via a universal control network (UCN) 14 connected to a network interface module (NIM) 602. In the preferred embodiment of process control system 10, additional process controllers 20 can be operatively connected to the plant control network 11 via a corresponding UCN 14 and a corresponding NIM 602. The process controllers 20, 20' interface the analog input and output signals, and digital input and output signals (A/I, A/O, D/I, and D/O respectively) to the process control system 10 from the variety of field devices (not shown) of the process being controlled which includes valves, pressure switches, pressure gauges, thermocouples...

The plant control network (or more simply network) 11 provides the overall supervision of the controlled process, in conjunction with the plant operator, and obtains all the information needed to perform the supervisory function, and includes an interface with the operator. The plant control network 11 includes a plurality of physical modules, which include a universal operator station (US) 122, an application module (AM) 124, a history module (HM) 126, a computer module (CM) 128, and duplicates (backup or secondary) of these modules (and additional types of modules, not shown) as necessary to perform the required control/supervisory function of the process being controlled. Each of these physical modules is operatively connected to a local control network (LCN) 120 which permits each of these modules to communicate with each other as necessary. The NIM 602 and HG 601 provide an interface between the LCN 120 and the UCN 14, and the LCN 120 and the data highway 12, respectively.

Physical modules 122, 124, 126, 128,... of network 11 of the preferred embodiment are of various specialized functional types. Each physical module is the peer, or equivalent, of the other in terms of right of access to the network's communication medium, or LCN 120, for the purpose of transmitting data to other physical modules of network 11.

Universal operator station module (US) 122 of network 11 is a work station for one or more plant operators. It includes an operator console which is the interface between the plant operator, or operators, and the process or processes of the plant for which they are responsible. Each universal operator station module 122, is connected to the LCN 120, and all communications between the universal operator station module 122, and any other physical module of network 11, is via the LCN 120. Universal operator station module 122 has access to data that is on the LCN 120 and the resources and data available through, or from, any of the other physical modules of network 11. The universal station module 122 includes a cathode ray tube display (CRT) (not shown) which includes a video display generator, an operator keyboard (KB) (not shown), a printer (PRT) (not shown), and can also include (but not shown) a floppy disk data storage device, trend pen recorders, and status displays, for example.

A history module (HM) 126 provides mass data storage capability. The history module 126 includes at least one conventional disk mass storage device such as a Winchester disk, which disk storage device provides a large volume of programs in higher level program languages. Typically, the data processing systems of a computer module 128 have the capability of communicating with other such systems by a communication processor and communication lines.

The local control network 120 (LCN) is a high-speed, bit serial, dual redundant communication network that interconnects all the physical modules of plant control network 11. LCN 120 provides the only data transfer path between the principal sources of data, such as highway gateway module 601, application module 124, and history module 126, and principal users of such data, such as universal operator station module 122, computer module 128, and application module 124. LCN 120 also provides the communication medium over which large blocks of data, such as memory images, can be moved from one physical module such as history module 126 to universal station module 122. LCN 120 is dual redundant in that it consists of two coaxial cables that permit the serial transmission of binary signals over both cables.

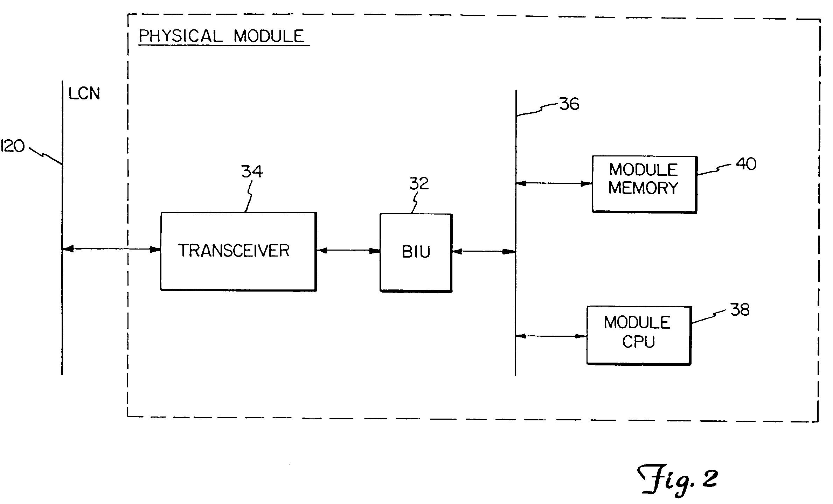

Referring to Fig. 2, there is shown a block diagram of the common elements of each physical module of the network 11 or the process control system 10. Each of the physical modules includes a module central processor unit 38 and a module memory 40, a random-access memory (not shown), and such additional controller devices, or units (not shown), which are configured to provide the desired functionality of that type of module, i.e., that of the operator station 122, for nonvolatile storage capability for binary data. The types of data stored by such a mass storage device are typically trend histories, event histories, ...or data from which such histories can be determined, data that constitutes or forms CRT type displays, copies of programs for the physical modules...

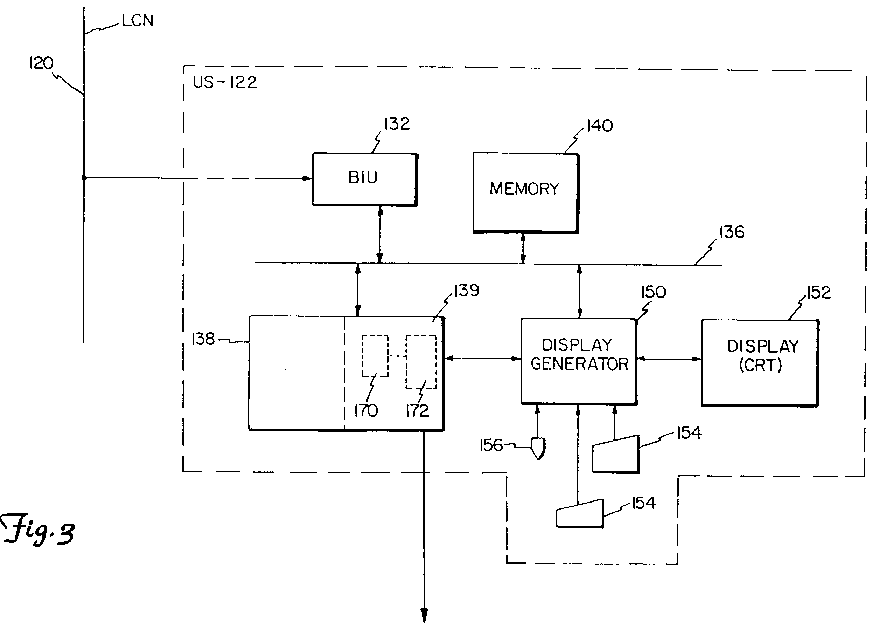

Referring now to Fig. 3, there is shown a block diagram of universal station 122. The universal station contains a bus interface unit 132, a memory unit 140, an internal bus 136, a CPU 138 which includes an attached coprocessor 139, a display generator 150 and a display or cathode ray tube (CRT) 152. Local control network 120 is connected to bus interface unit 132 which is then connected to universal station internal bus 136. Memory 140, CPU 138 and display generator 150 are also connected to internal bus 136.

As previously mentioned CPU 138 has an attached coprocessor 139. A direct connection exist between coprocessor 139 and display generator 150. Coprocessor 139 also has a connection outside of universal station 122 which could be attached to other networks or other computer systems (e.g. a VAX computer system manufactured by Digital Electronics Corp., Maynard, Massachusetts, or an IBM computer system manufactured by International Business Machines Inc., Armonk, N.Y.). This connection between coprocessor 139 and other computer systems provides the desired open architecture which shall be discussed in further detail. Attached to display generator 150 are numerous input devices such as a keyboard 154 and a pointing device 156. In the preferred embodiment the pointing device can be either a mouse or a touch screen.

Communication between the process control system and separate stand-alone computer systems can provide many benefits and desired features. One particular feature is the ability to import different displays from computer systems onto the process control system. This provides the process control system with the ability to view displays from any number of computer systems which may be connected via a standard network.

Coprocessor 139 provides the universal station with the ability to communicate with other remote computer systems. In the preferred embodiment, coprocessor 139 is a Motorola 68040 microprocessor running the UNIX operating system (UNIX is an operating system of the American Telephone and Telegraph Company, AT&T, and is readily available and well known to those the art). Coprocessor 139 is sometimes referred to as a UNIX coprocessor.

Coprocessor 139 provides windowing capabilities for Universal station 122. The coprocessor runs the X-Windows windowing system. (X-Windows was developed by the Massachusetts Institute of Technology, Cambridge, Massachusetts and is well known to those skilled in the art.) This windowing system allows the open export and import of displays. Due to specific characteristics of process control system 10, the network display of the preferred embodiment cannot be exported through the windowing system, however no specific limitations exist which limit the import of displays.

Coprocessor 139 is connected to display generator 150. Display generator 150 provides some graphics capabilities for display 152 while also communicating with the windowing system. In the preferred embodiment the display generator contains two microprocessors, a Motorola 68020 general processor and a Texas Instruments (TI) TMS 34020 graphics processor.

While display generator 150 provides some graphic capabilities to display 152, the windowing system running within coprocessor 139 does all of the display management.

Display generator 150 is also connected to internal bus 136. This connection allows LCN 120 to display information on display 152 via bus interface unit 132, internal bus 136, and display generator 150. However, since coprocessors 139 manages display 152, LCN 120 will not be able to display any information until the windowing system allows LCN 120 to write to display 150. LCN 120 can display information without going through CPU 138 or coprocessor 139 when allowed to do so by the windowing system. The LCN display is required because it is necessary for LCN 120 to display information on display 152 if CPU 138 or coprocessor 139 should malfunction for some reason.

Because it is required that display generator 150 be used to allow displays to be generated by both local control network 120 and coprocessor 139 numerous considerations had to be made in coprocessor 139 and in the windowing system to allow operation on display generator 150. These considerations include interfacing between coprocessor 139 and display generator 150, recognition of keyboards 154 and pointing device 156 by coprocessor 139, handshaking between display generator 150 and coprocessor 139, and maintenance of color lookup tables in display generator 150.

Referring again to Fig. 3, coprocessor 139 has within itself a graphics server 170 and an interpreter/mediator 172. Graphic server 170 provides the windowing capabilities of the display system. Interpreters/mediator 172 (here after interpreter 172) provides an interface between graphic server 170 and display generator 150. In the preferred embodiment, interpreter 172 is running under the UNIX operating system and operates separately from graphic server 170. Interpreter 172 receives commands from graphic server 170 and where necessary transforms them into a format which display generator 150 can understand. Thereafter, interpreter 170 transmits these interpreted commands to display generator 150. Similarly, interpreter 172 receives commands and signals from the display generator 150 and interprets them into a format which graphic server 170 can understand. These signals include messages from the keyboard and/or pointing devices as well as handshaking signals between display generator 150 and graphic server 170. As previously mentioned, graphic server 170 operates using the X-Windows system developed by the Massachusetts Institute of Technology. Commands sent from graphic server 170 to interpreter 172 are using a mailbox style protocol. Similarly, messages sent from interpreter 172 back to graphic server 170 are also using a mailbox style protocol.

As mentioned, the windowing system controls the graphics on display 152. However, LCN 120 can also display information on display 152. For LCN 120 to display information, the windowing system (or graphics server 170) must enable such a display of information. Initially, graphics server 170 causes a window to be opened (LCN window) on display 152. Again, all communication from graphics screen 170 to display generator 150 goes through interpreter 172. Once the LCN window is open, graphics server 170 communicates with display generator 150 to allow LCN 120 to overwrite its display to the newly opened window (LCN window).

Display generator 150 has as many as three different keyboards attached thereto. Considerations must be made such that the windowing system, (i.e., graphic server 170) recognizes the keys from each of these keyboards. Recognition of the keyboards is achieved by providing graphic server 170 with the necessary logic to recognize all keyboards. Interpreter 172 aids in this process by converting the key codes into predetermined (VT 200 style) scan codes. Similarly, recognition of different pointing devices was necessary. Pointing devices include absolute positioning pointing devices such as touch screens and relative position pointing devices such as mice. Again, alterations must be made to graphic server 170 to allow recognition of these different pointing devices.

Display generator 150 contains a color lookup table in which it stores color values for different clients or applications. As previously mentioned, coprocessor 139, and more specifically graphics server 170, contains the ability to communicate with many different clients from local and remote computer systems and the ability to have them displayed on system display 152. Because different display types may be necessary, it is essential that graphic server 170 have the ability to alter the color lookup table within display generator 150. For example, the color lookup table for one client may be entirely different than that of the color lookup table for process control system 10. In order to maintain the integrity of LCN display, graphics server 170 must insure that the color map for process control system 10 be consistant with all other color maps.

As previously mentioned, it is important that local control network 120 be able to display control information onto display 152 should processor 138 or coprocessor 139 malfunction. Therefore, display generator 150 has a direct connection to local control network 120. This LCN display projects crucial systems information concerning process control system 10. In an oil refinery, for example information regarding dangerous conditions is displayed via local control network 120. Therefore, it is important that the local control network display (LCN display) maintain its integrity and speed, displaying the correct colors and correct images. To maintain the integrity of the LCN display while also providing the ability to import other displays to the control system display 152, the first thirty-two (32) colors of the display generator color lookup table have been assigned to the color values corresponding to the LCN display. Graphics processor 170 will not allow the first thirty-two (32) color values in the display generator color lookup table to be altered. Therefore, the first thirty-two (32) color values remain constant regardless of the type of display being imported to display generator 150. By keeping the these color values in the color lookup table constant the integrity of the LCN display is maintained. Therefore when it becomes necessary for LCN 120 to display important information upon system display 152 the appropriate colors will be loaded into the first 32 color values of the color lookup table.

Display generator 150 has a hardware supported cursor control. Signals are transmitted from display generator 150 to graphics server 170 which correspond to cursor commands. For graphic server 170 to properly recognize this hardware supported cursor additional logic had to be added to graphics processor 170. Additionally, interpreter 172 aids with the recognition of cursor commands by performing necessary interpretation. This logic then allows graphics processor 170 to recognize the hardware supported cursor and provide for its accurate operation.

Lastly, interpreter 172 and display generator 150 constantly communicate status checks to one another. These status checks ensure the correct operation of each device and recognize if one of these devices should fail. When a status check fails, indicating the graphics processor has failed, control of display 152 is immediately passed to local control network 120. Therefore, display 152 has the ability to communicate any necessary information to the operators. This "fall back" mode is necessary to insure proper and safe operation of process control system 10.

The present invention has been described in considerable detail. Those skilled in the art will understand certain modifications and changes can be made to the present invention without departing from the scope and spirit of the invention.

## Claims

1. Display apparatus for a process control system wherein the process control system has an internal network bus, the display apparatus characterised by:
a display means for displaying graphic images, the display means comprising a display device and a display generator wherein the display generator has a first communication port and a second communication port, the first communication port connected to the internal network bus;
a server means for operating a windowing graphics system which allows bit-mapped graphics and which also allows for numerous windows to be displayed on the display device at one time:
an interpreter means connected between the server means and the display generator's second communication port, the interpreter means for accommodating communication between the server means and the display means.

2. Display apparatus according to Claim 1 characterised in that the server means is operable with X-windows protocol.

3. Display apparatus according to Claim 1 characterised in that the display generator means has a color lookup table for storing the current color map for the display device and the server means has the ability to alter the contents of the color lookup table.

4. Display apparatus for a process control system, the apparatus characterised by:
display means for projecting images
display generator means having a first input and a second input, the display generator means for receiving display signals representative of display information and control signals representative of how information is to be display, and for transmitting display signals to the display means which cause said information to be projected on the display screen;
network means connected to the display generator means first input for communicating display signals representative of a network display;
interpreter means connected to the display generator means second input, having an input, the interpreter means for interpreting signals received on the input and transmitting interpreted signals to the display generator means; and
windowing means connected to the interpreter for communicating control signals and display signals to the interpreter means, said control signals for controlling which display signals are transmitted to the display means from the display generator means.

5. Display apparatus according to any preceding Claim characterised by the display generator means with a color lookup table and wherein the windowing means is capable of altering the values within the color lookup table.

6. Display apparatus according to Claim 5 characterised in that the values within a first portion of the color lookup table remain constant.

7. Display apparatus according to Claim 6 characterised in that the first portion of the color lookup table comprises the first 32 color values.

8. Display apparatus according to any preceding Claim characterised by a plurality of keyboards connected to display generator means wherein the display generator means receives key signals from the keyboards and communicates these key signals to interpreter means which interprets the key signals and transmits the interpreted key signals to windowing means.

9. Display apparatus according to any preceding Claim characterised by a plurality of pointing devices connected to display generator means wherein the display generator means receives pointing device signals to interpreter means which interprets the pointing device signal to a windowing system.

10. Display apparatus according to Claim 10 characterised in that the pointing device comprises a mouse.

11. Display apparatus according to Claim 10 or 11 characterised in that the pointing device comprises a roller ball.
